# EUROPEAN PATENT SPECIFICATION

(11) **EP 4 348 470 B1**
(45) Date of publication and mention of the grant of the patent: **05.03.2025**
(21) Application number: 22730694.1
(22) Date of filing: 18.05.2022
(51) Int. Cl.: G06F 21/57, G06F 21/70, G06F 21/51

(54) **SECURE APPLET ACCESS PROTECTION**
SICHERER APPLET-ZUGRIFFSSCHUTZ
PROTECTION D'ACCÈS SÉCURISÉ À UNE APPLET

(30) Priority: 26.05.2021 EP 21305688
(43) Date of publication of application: 10.04.2024
(73) Proprietor: THALES DIS FRANCE SAS, 92190 Meudon (FR)
(72) Inventor: GIRARD, Pierre, 13705 LA CIOTAT (FR)
(74) Representative: Quintero Romero, Manuel
(86) International application number: PCT/EP2022/063444
(87) International publication number: WO 2022/248307

(56) References cited:
- WO-A1-2018/194923
- US-A1- 2015 089 586
- US-A1- 2019 364 023

## Description

### FIELD OF THE INVENTION

The present invention relates to a device having at least an application processor, a communication module having a secure element that comprises a secure applicative applet, said application processor accessing the secure element via the communication module using a mono interface configuration.

The invention also pertains to a method to protect access by an application processor to a secure applicative applet in a secure element of a communication module of a device.

### BACKGROUND OF THE INVENTION

With the deployment of mobile communication means into various objects/devices, such as cars, it is now common to use secure elements to secure the interactions with others objects and with networks.

Secure elements are widely available into the form factor of embedded universal integrated circuit card eUICC. However the invention targets any secure element, embedded or not.

Such secure elements are generally not entirely used in terms of capacity, both memory and computing power, by the communication module with which they interface. Thus such secure element can be used as a general purpose secure Element by an application processor of the device.

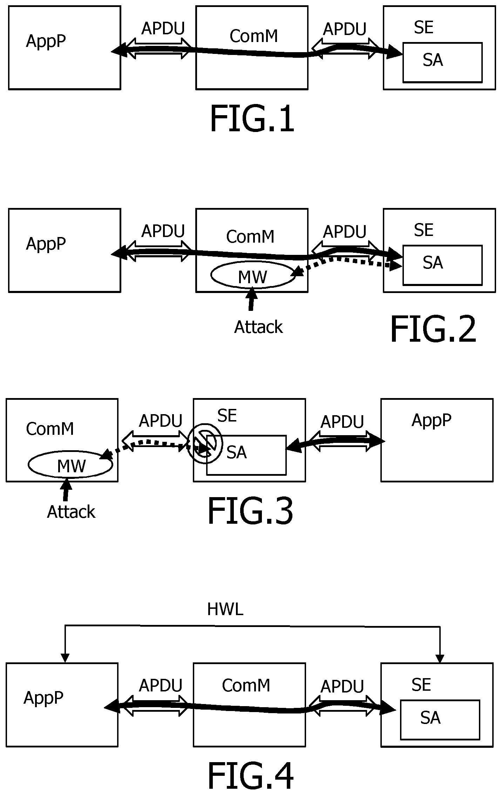

A typical configuration is depicted on figure 1. An application processor AppP interfaces with a communication module ComM having itself a secure element SE comprising at least an applicative application, which is to be secure in the secure element. This applicative application is called security applet SA in the following.

The application processor AppP interfaces classically with the communication module ComM using APDU over AT commands. The secure element SE and the communication module ComM also use APDU for their communication.

With this simple implementation of figure 1, the secure element SE, typically an eUICC, receives commands coming from two external entities, the application processor AppP via the communication module ComM and from the communication module ComM itself. It cannot indeed differentiate the ones coming from the application processor AppP.

This configuration is typically the one encountered in the automotive field and it is already deployed in the field for some automotive manufacturer. The three components can be diversely integrated to each other but the communication scheme as shown on figure 1 remains the same.

In this architecture, the communication module ComM is the forefront communication component of the device, typically a car. It is thus also the most exposed to hacking. It will be most probably the first element to be infected by malware MW as shown on figure 2. In such a case, a malware MW will have direct illegal access to the security applet SA and could use its keys.

Such a single hardware interface is thus not secure at all. Besides it is known to use a dual hardware interface which is more secure but also often too complex and also too costly for an implementation in the targeted devices.

Such a dual hardware interface is a classical protection, which uses a eUICC to offer a second hardware interface.

For example, as shown on figure 3, the communication module ComM could communicate using APDU over the mono interface, typically ISO7816, whereas the application processor AppP communicates over an SPI interface with the secure element SE.

When a security applet SA is implemented in the secure element SE, the security applet SA is able to know from which hardware interface the commands come. It will thus be able to reject the ones coming from ISO7816 interface in our example.

However this configuration is costly to develop as it is needed to develop and to test two communications stacks, the SPI interface and the ISO7816 interface. In addition the both interfaces may be use concurrently which adds a layer of software complexity and lead to painful debugging and testing. Documents US 2015/089586, US 2019/364023 and WO 2018/194923 form part of the background art.

Further alternative and advantageous solutions would accordingly be desirable in the art.

### SUMMARY OF THE INVENTION

The present invention aims at avoiding, or at least making more difficult the above-mentioned malicious attacks.

The present invention is defined, in its broadest sense, as a device having at least an application processor, a communication module having a secure element that comprises a secure applicative applet, said application processor accessing the secure applicative applet in the secure element via the communication module using a mono interface configuration, said device being further such that it comprises an hardware link between the application processor and the secure element to transmit an hardware signal triggered by the application processor only when the application processor sends a command, the secure element being such that, when the hardware signal is not activated, any received command aiming the secure applicative applet is rejected.

The invention thus proposes to use an hardware link to unlock the access to a secure applicative applet. By hard wiring one secure element input signal only to one of the two entities, the secure element is then able to discriminate which of them is sending a command to the secure element.

The hardware signal will be activated by the application processor only when it sends a command. So if the security applet receives a command whereas the GPIO signal is not activated, it will be rejected.

Indeed the security applet, while receiving a command, has no way to known if the commands comes from the application processor or not. If the GPIO signal is activated, it has a good indication that the command comes from the application processor.

This inventive set-up will still offer a window of opportunity for an attacker but a much reduced one. The trade-off between security and cost is adapted to many applications.

According to a feature, the hardware signal is a general purpose in/out GPIO signal.

Advantageously, the secure element is embedded in the communication module.

Such an implementation is recognized as being a secure and efficient solution in the aimed Internet of Things applications.

Advantageously too, the mono interface configuration is according to the ISO7816 standard.

Such a standardized configuration in combination with the hardware signal of the invention is a simple and efficient embodiment.

According to a preferred embodiment, the secure element having a MFF2 standard form factor, the hardware signal is implemented on a remaining pin.

A secure element having this standardized form factor has at least one unconnected pin available to add the GPIO signal. It is thus used to wire a simple hardware signal to the application processor.

In an embodiment, the secure element being non-standardized, the hardware signal is implemented with proprietary general purpose in/out GPIO signals.

There is generally room on any non-standardized secure element to implement the use of an hardware signal of the invention. If the eUICC is delivered as non-standard form factor, the GPIOs signals are indeed already available.

In a centralized embodiment, the secure element including a list of secure applicative applets, the secure element checks the activation of the hardware signal only for commands aiming an applicative applet listed in the list of secure applicative applets.

This embodiment is a kind of filtering module for the secure element using a table associating each applet with a secure applicative nature or not. Here the command is transfered to a secure applicative applet listed only if the hardware signal is activated.

In a decentralized embodiment of the invention, the secure applicative applet itself triggers the step of checking the activation of the hardware signal and itself reject the command.

Here each applet knows if it is secure applicative or not and checks the activation of the signal. If the hardware signal of the invention is not activated, the secure applicative applet triggers an error.

The invention also relates to a method to protect access by an application processor to a secure applicative applet in a secure element via a communication module of a device using mono interface configuration, said device having further an hardware link between the application processor and the secure element to transmit an hardware signal, said method comprising the steps of:
- for the application processor, sending a command targeting the secure applicative applet to the secure element via the communication module,
- for the application processor, triggering an hardware signal on the hardware link in parallel to the sending of the command,
- for the secure element, receiving the command sent by the application processor and targeting the secure applicative applet,
- for the secure element, checking that the hardware signal is activated on the hardware link,
- for the secure element, reject the command targeting the secure applicative applet if the hardware signal is not activated.

Such a method implemented in a device of the invention enables the secure applicative applet to insure that an incoming command is genuinely sent from the application processor.

Therefore, the method according to the present invention allows reducing the risks of malicious attacks. At least, the attacks are more complex to carry out for a malicious attacker.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed.

Other advantages and novel features will become apparent from the following detailed description when considered in conjunction with the drawings and the disclosed embodiments are intended to include all such aspects and their equivalents.
- Figure 1 schematically represents a first type of device of the prior art;
- Figure 2 schematically represents an attack on the first type of device of the prior art;
- Figure 3 schematically represents a second type of device of the prior art; and
- Figure 4 schematically represents a device of the invention;
- Figure 5 shows a flowchart of a method of the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

Figure 4 schematically shows a device of the first type of the prior art where the invention has been implemented. The device of the invention is such that an hardware link HWL is added between the application processor AppP and the secure element SE. This hardware link HWL is dedicated to transmit an hardware signal activated by the application processor when it sends in parallel a command to the secure applicative applet SA in the secure element SE.

The hardware link HWL can use a spare and thus available GPIO of the secure element. It can also use an unconnected pin of the secure element in case such a pin is available. This is the case for secure element having a MFF2 standard form factor.

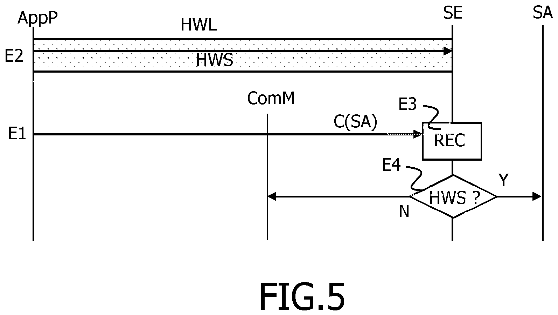

Figure 5 shows a flowchart of the method of the invention.

In a first step E1, the application processor AppP, send a command C(SA) targeting the secure applicative applet SA to the secure element SE via the communication module ComM as besides shown on figure 1. In parallel, a step E2 occurs where the application processor sends an hardware signal HWS on the hardware link HWL illustrated by a dotted box between the application processor AppP and the secure element SE on figure 5.

The secure element SE receives the command C(SA) in a step E3. The secure element SE then checks in a step E4 if an hardware signal HWS is activated on the hardware link HWL.

In the case the hardware signal HWS is not activated (case N), the secure element SE rejects the command C(SA) and preferably informs the communication module ComM by return.

In the case the hardware signal HWS is activated (case Y), the secure element SE provides the command C(SA) to the secure applicative applet.

Before the invention's implementation, it was not possible for the secure element to know from where a command came.

This is not critical for telco applet where the commands target functionalities of the secure element SE (SIM, USIM, ISIM etc). In this case there is no need for a mechanism of the invention. The secure element SE is now able to have a different behavior depending on the targeted applet.

For any secure applicative applet, the secure element SE can use a mechanism of the invention.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

## Claims

1. Device having at least an application processor (AppP), a communication module (ComM) having a secure element (SE) that comprises a secure applicative applet (SA), said application processor (AppP) accessing the secure applicative applet (SA) in the secure element (SE) via the communication module (ComM) using a mono interface configuration, said device being further such that it comprises an hardware link (HWL) between the application processor (AppP) and the secure element (SE) to transmit an hardware signal (HWS) triggered by the application processor (AppP) only when the application processor (AppP) sends a command (C(SA)), the secure element (SE) being such that, when the hardware signal (HWS) is not activated, any received command (C(SA)) aiming the secure applicative applet (SA) is rejected.

2. Device according to claim 1, wherein the hardware signal (HWS) is a general purpose in/out GPIO signal.

3. Device according to one of claims 1 and 2, wherein the secure element (SE) is embedded in the communication module (ComM).

4. Device according to one of claims 1 and 2, wherein the mono interface configuration is according to the ISO7816 standard.

5. Device according to one of the preceding claims, wherein the secure element (SE) having a MFF2 standard form factor, the hardware signal (HWS) is implemented on a remaining pin.

6. Device according to one of claims 1 to 3, wherein the secure element (SE) being non-standardized, the hardware signal (HWS) is implemented on any available general purpose in/out GPIO pin on a proprietary package.

7. Device according to any one of the preceding claims, wherein, the secure element (SE) including a list of secure applicative applets (SA), the secure element (SE) checks the activation of the hardware signal (HWS) only for commands (C(SA)) aiming an applicative applet listed in the list of secure applicative applets (SA).

8. Device according to any one of the preceding claims, wherein the secure applicative applet (SA) itself triggers the step of checking the activation of the hardware signal (HWS) and itself reject the command (C(SA)).

9. Method to protect access by an application processor (AppP) to a secure applicative applet (SA) in a secure element (SE) via a communication module (ComM) of a device using mono interface configuration, said device having further an hardware link (HWL) between the application processor (AppP) and the secure element (SE) to transmit an hardware signal (HWS), said method comprising the steps of:
- for the application processor (AppP), sending a command (C(SA)) targeting the secure applicative applet (SA) to the secure element (SE) via the communication module (ComM),
- for the application processor (AppP), triggering an hardware signal (HWS) on the hardware link (HWL) in parallel to the sending of the command (C(SA)),
- for the secure element (SE), receiving the command (C(SA)) sent by the application processor (AppP) and targeting the secure applicative applet (SA),
- for the secure element (SE), checking that the hardware signal (HWS) is activated on the hardware link (HWL),
- for the secure element (SE), reject the command (C(SA)) targeting the secure applicative applet (SA) if the hardware signal (HWS) is not activated.

## Patentansprüche

1. Vorrichtung, die mindestens einen Anwendungsprozessor (AppP) aufweist, Kommunikationsmodul (ComM), das ein sicheres Element (SE) aufweist, das ein sicheres Anwendungs-Applet (SA) umfasst, wobei der Anwendungsprozessor (AppP) auf das sichere Anwendungs-Applet (SA) in dem sicheren Element (SE) über das Kommunikationsmodul (ComM) unter Verwendung einer Monoschnittstellenkonfiguration zugreift, wobei die Vorrichtung ferner derart beschaffen ist, dass sie eine Hardwareverbindung (HWL) zwischen dem Anwendungsprozessor (AppP) und dem sicheren Element (SE) umfasst, um ein Hardwaresignal (HWS), das durch den Anwendungsprozessor (AppP) ausgelöst wird, nur dann zu übertragen, wenn der Anwendungsprozessor (AppP) einen Befehl (C(SA)) sendet, wobei das sichere Element (SE) derart beschaffen ist, dass, wenn das Hardwaresignal (HWS) nicht aktiviert ist, ein beliebiger empfangener Befehl (C(SA)), der auf das sichere Anwendungs-Applet (SA) abzielt, abgelehnt wird.

2. Vorrichtung nach Anspruch 1, wobei das Hardwaresignal (HWS) ein allgemeines Ein-/Aus-GPIO-Signal ist.

3. Vorrichtung nach einem der Ansprüche 1 und 2, wobei das sichere Element (SE) in das Kommunikationsmodul (ComM) eingebettet ist.

4. Vorrichtung nach einem der Ansprüche 1 und 2, wobei die Monoschnittstellenkonfiguration gemäß dem ISO7816-Standard ist.

5. Vorrichtung nach einem der vorstehenden Ansprüche, wobei das sichere Element (SE) einen MFF2-Standardformfaktor aufweist, das Hardwaresignal (HWS) auf einem verbleibenden Pin implementiert ist.

6. Vorrichtung nach einem der Ansprüche 1 bis 3, wobei das sichere Element (SE) nicht standardisiert ist, das Hardwaresignal (HWS) auf einem beliebigen verfügbaren allgemeinen Ein-/Aus-GPIO-Pin auf einem proprietären Paket implementiert ist.

7. Vorrichtung nach einem der vorstehenden Ansprüche, wobei das sichere Element (SE) eine Liste von sicheren Anwendungs-Applets (SA) einschließt, das sichere Element (SE) die Aktivierung des Hardwaresignals (HWS) nur für Befehle (C(SA)) überprüft, die auf ein Anwendungs-Applet abzielen, das in der Liste von sicheren Anwendungs-Applets (SA) aufgelistet ist.

8. Vorrichtung nach einem der vorstehenden Ansprüche, wobei das sichere Anwendungs-Applet (SA) den Schritt des Überprüfens der Aktivierung des Hardwaresignals (HWS) selbst auslöst und den Befehl (C(SA)) selbst ablehnt.

9. Verfahren, um den Zugriff durch einen Anwendungsprozessor (AppP) auf ein sicheres Anwendungs-Applet (SA) in einem sicheren Element (SE) über ein Kommunikationsmodul (ComM) einer Vorrichtung unter Verwendung einer Monoschnittstellenkonfiguration zu schützen, wobei die Vorrichtung ferner eine Hardwareverbindung (HWL) zwischen dem Anwendungsprozessor (AppP) und dem sicheren Element (SE) aufweist, um ein Hardwaresignal (HWS) zu übertragen, das Verfahren umfassend die Schritte:
- für den Anwendungsprozessor (AppP), Senden eines Befehls (C(SA)), der auf das sichere Anwendungs-Applet (SA) gerichtet ist, an das sichere Element (SE) über das Kommunikationsmodul (ComM),
- für den Anwendungsprozessor (AppP), Auslösen eines Hardwaresignals (HWS) auf der Hardwareverbindung (HWL) parallel zu dem Senden des Befehls (C(SA)),
- für das sichere Element (SE), Empfangen des Befehls (C(SA)), der durch den Anwendungsprozessor (AppP) gesendet wird, und Richten auf das sichere Anwendungs-Applet (SA),
- für das sichere Element (SE), Überprüfen, dass das Hardwaresignal (HWS) auf der Hardwareverbindung (HWL) aktiviert ist,
- für das sichere Element (SE), Ablehnen des Befehls (C(SA)), der auf das sichere Anwendungs-Applet (SA) gerichtet ist, falls das Hardwaresignal (HWS) nicht aktiviert ist.

## Revendications

1. Dispositif comportant au moins un processeur d'application (AppP), un module de communication (ComM) comportant un élément sécurisé (SE) qui comprend un applet applicatif sécurisé (SA), ledit processeur d'application (AppP) accédant à l'applet applicatif sécurisé (SA) dans l'élément sécurisé (SE) par l'intermédiaire du module de communication (ComM) à l'aide d'une configuration mono-interface, ledit dispositif étant en outre tel qu'il comprend une liaison matérielle (HWL) entre le processeur d'application (AppP) et l'élément sécurisé (SE) pour transmettre un signal matériel (HWS) déclenché par le processeur d'application (AppP) uniquement lorsque le processeur d'application (AppP) envoie une commande (C(SA)), l'élément sécurisé (SE) étant tel que, lorsque le signal matériel (HWS) n'est pas activé, toute commande reçue (C(SA)) visant l'applet applicatif sécurisé (SA) est rejetée.

2. Dispositif selon la revendication 1, dans lequel le signal matériel (HWS) est un signal GPIO d'entrée/sortie à usage général.

3. Dispositif selon l'une des revendications 1 et 2, dans lequel l'élément sécurisé (SE) est embarqué dans le module de communication (ComM).

4. Dispositif selon l'une des revendications 1 et 2, dans lequel la configuration mono-interface est conforme à la norme ISO7816.

5. Dispositif selon l'une des revendications précédentes, dans lequel l'élément sécurisé (SE) ayant un facteur de forme standard MFF2, le signal matériel (HWS) est implémenté sur une broche restante.

6. Dispositif selon l'une des revendications 1 à 3, dans lequel l'élément sécurisé (SE) étant non standardisé, le signal matériel (HWS) est implémenté sur n'importe quelle broche GPIO d'entrée/sortie à usage général disponible sur un boîtier propriétaire.

7. Dispositif selon l'une quelconque des revendications précédentes, dans lequel, l'élément sécurisé (SE) comportant une liste d'applets applicatifs sécurisés (SA), l'élément sécurisé (SE) vérifie l'activation du signal matériel (HWS) uniquement pour des commandes (C(SA)) visant un applet applicatif répertorié dans la liste d'applets applicatifs sécurisés (SA).

8. Dispositif selon l'une quelconque des revendications précédentes, dans lequel l'applet applicatif sécurisé (SA) déclenche lui-même l'étape de vérification de l'activation du signal matériel (HWS) et rejette lui-même la commande (C(SA)).

9. Procédé destiné à protéger l'accès par un processeur d'application (AppP) à un applet applicatif sécurisé (SA) dans un élément sécurisé (SE) par l'intermédiaire d'un module de communication (ComM) d'un dispositif à l'aide d'une configuration mono-interface, ledit dispositif comportant en outre une liaison matérielle (HWL) entre le processeur d'application (AppP) et l'élément sécurisé (SE) pour transmettre un signal matériel (HWS), ledit procédé comprenant les étapes consistant à :
- pour le processeur d'application (AppP), envoyer une commande (C(SA)) ciblant l'applet applicatif sécurisé (SA) à l'élément sécurisé (SE) par l'intermédiaire du module de communication (ComM),
- pour le processeur d'application (AppP), déclencher un signal matériel (HWS) sur la liaison matérielle (HWL) parallèlement à l'envoi de la commande (C(SA)),
- pour l'élément sécurisé (SE), recevoir la commande (C(SA)) envoyée par le processeur d'application (AppP) et ciblant l'applet applicatif sécurisé (SA),
- pour l'élément sécurisé (SE), vérifier que le signal matériel (HWS) est activé sur la liaison matérielle (HWL),
- pour l'élément sécurisé (SE), rejeter la commande (C(SA)) ciblant l'applet applicatif sécurisé (SA) si le signal matériel (HWS) n'est pas activé.
